# EUROPEAN PATENT APPLICATION

(11) **EP 2 731 338 A1**
(43) Date of publication of application: **14.05.2014**
(21) Application number: 13191992.0
(22) Date of filing: 07.11.2013
(51) Int. Cl.: H04N 19/00

(54) **Electronic device and method for splitting image**

(30) Priority: 13.11.2012 TW 101142262
(71) Applicant: Hon Hai Precision Industry Co., Ltd., New Taipei City (TW)
(72) Inventor: Lee, Chung-I, New Taipei (TW); Yeh, Chien-Fa, New Taipei (TW); Tang, Ming-Hua, New Taipei (TW)
(74) Representative: Gray, John James

(57) **Abstract**

In a method for splitting an image, a largest coding unit (LCU) of the image is obtained. The method divides the LCU into a plurality of N×N blocks and coding unit (CU) blocks (S10), calculates an angle of each N×N block (S11), obtains angles of the N×N blocks in each CU block, and determines a split mode of each CU block according to the angles of the N×N blocks in each CU block (S12). The method splits the current CU block into four sub-blocks if the split mode of the current CU block is a continuation mode (S14), and stops splitting of the current CU block if the split mode of the current CU block is a termination mode (S16).

## Description

### Field

Embodiments of the present disclosure relate to image coding technology, and particularly to an electronic device and method for splitting an image using the electronic device.

### BackGround

High efficiency video coding (i.e., HEVC/H.265) is currently used as a video coding method by the Joint Collaborative Team on Video Coding (JCT-VC). One goal of the team is to improve compression performance relative to existing standards - in the range of 50% bit rate reduction for equal perceptual video quality.

In a coding process, an image is divided into a plurality of largest coding units (LCU) having a specified size, and each LCU is divided into a plurality of coding units (CU) blocks having different sizes using a recursive algorithm according to a quad tree structure. An optimized split mode of each CU block is determined when the recursive process is ended. Because all the CU blocks of different sizes in the LCU needs to be tested in the recursive process, thus, the computing time and the complexity of the recursive process is very high. Therefore, a more efficient method for splitting an image is desired.

### Summary

According to one aspect of the disclosure, an image splitting method is provided. The image splitting method includes obtaining a largest coding unit (LCU) of the image, and dividing the LCU into a plurality of N×N blocks, the LCU comprising a plurality of coding unit (CU) blocks, each of the CU blocks comprising a plurality of N×N blocks. Calculating an angle of each of the N×N blocks, determining a split mode of each of the CU blocks according to the angles of the N×N blocks, and determining whether a current CU block needs to be split according to the split mode of the current CU block. Splitting the current CU block into four sub-blocks upon the condition that the split mode of the current CU block is a continuation mode, and stopping splitting of the current CU block upon the condition that the split mode of the current CU block is a termination mode.

### BRIEF DESCRIPTION OF THE DRAWINGS

FIG. 1 is a block diagram of one embodiment of an electronic device including an image splitting system.

FIG. 2 is a schematic diagram of function modules of the image splitting system included in the electronic device.

FIG. 3 is a flowchart of a first embodiment of a method for splitting an image using the electronic device.

FIG. 4 is an exemplary schematic diagram of a quad tree.

FIG. 5 is an exemplary schematic diagram of image splitting according to the quad tree of FIG. 4.

FIG. 6 is a flowchart of a second embodiment of a method for splitting an image using the electronic device.

### DETAILED DESCRIPTION

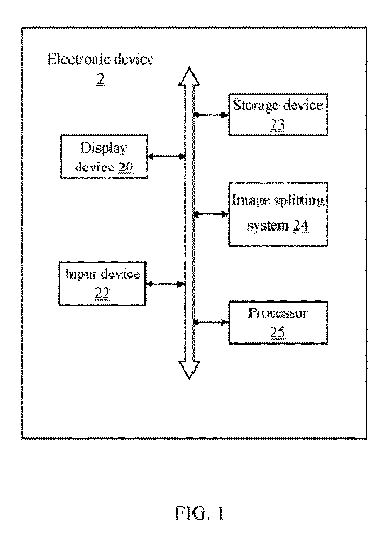

FIG. 1 is a block diagram of one embodiment of an electronic device 2 including an image splitting system 24. In the embodiment, the electronic device 2 further includes a display device 20, an input device 22, a storage device 23, and at least one processor 25. The electronic device 2 may be a computer, a smart phone or a personal digital assistant (PDA). It should be understood that FIG. 1 illustrates only one example of the electronic device 2 that may include more or fewer components than illustrated, or have a different configuration of the various components in other embodiments.

The display device 20 may display decoded images, and the input device 22 may be a mouse or a keyboard used to input computer readable data. The storage device 23 may be a non-volatile computer storage chip that can be electrically erased and reprogrammed, such as a hard disk or a flash memory card.

In one embodiment, the image splitting system 24 may include computerized instructions in the form of one or more programs that are executed by the at least one processor 25 and stored in the storage device 23 (or memory). A detailed description of the image splitting system 24 will be given in the following paragraphs.

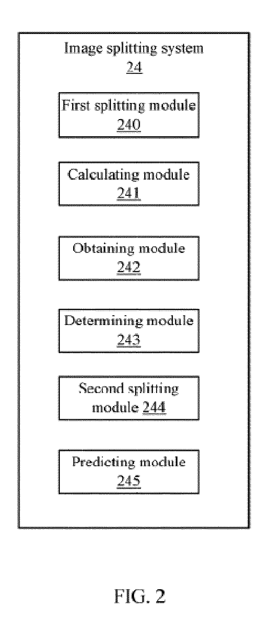

FIG. 2 is a block diagram of function modules of the image splitting system 24 included in the electronic device 2. In one embodiment, the image splitting system 24 may include one or more modules, for example, a first splitting module 240, a calculating module 241, an obtaining module 242, a determining module 243, a second splitting module 244, and a predicting module 245. In general, the word "module", as used herein, refers to logic embodied in hardware or firmware, or to a collection of software instructions, written in a programming language. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable medium include flash memory and hard disk drives.

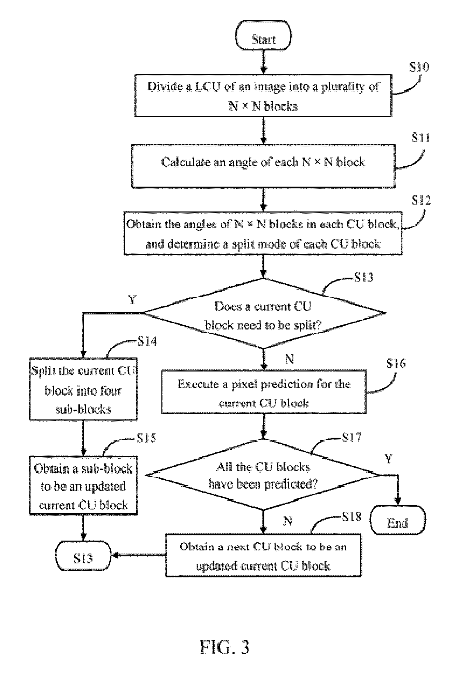

FIG. 3 is a flowchart of a first embodiment of a method for splitting an image using the electronic device 2. Depending on the embodiment, additional steps may be added, others removed, and the ordering of the steps may be changed.

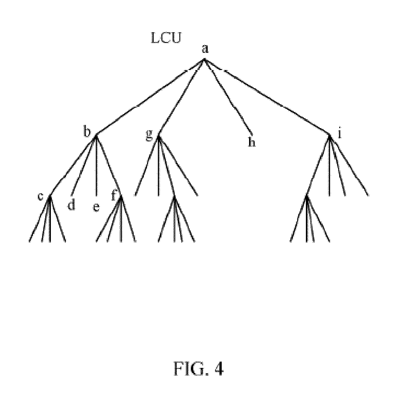

In step S10, the first splitting module 240 obtains an image from the storage device 23 or other storage mediums, obtains a largest coding unit (LCU) of the image, and divides the LCU into a plurality of N×N blocks. In one embodiment, the image is divided into a plurality of LCUs of a specified size (e.g., 64x64) when the image is encoded, and each LCU is divided into a plurality of coding unit (CU) blocks of different sizes using a recursive algorithm according to a quad tree structure (refers to FIG. 4). Each CU block includes a plurality of N×N blocks, such as 8x8 blocks (e.g., N=8).

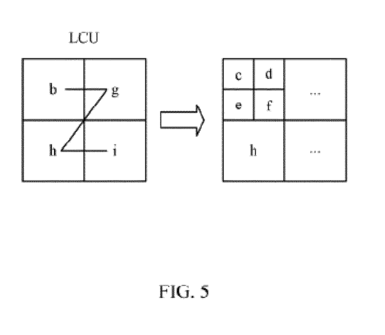

A size of a CU block is variable at different recursive levels. For example, as shown in FIG. 5, the LCU is divided into four CU blocks "b", "g", "h", and "i" having a first size at a first recursive level, and the first CU block "b" is further divided into four small CU blocks "c", "d", "e", and "f" at a second recursive level.

In a first embodiment, one LCU of the image is illustrated to be divided, other LCUs of the image may be split using a same method. For example, the specified size of the LCU in the first embodiment is 64x64, and the LCU is divided into sixty-four 8x8 blocks.

In step S11, the calculating module 241 calculates an angle of each N×N block, for example, calculates sixty-four angles of the sixty-four 8x8 blocks. The angle of the N×N block may be calculated using a discrete cosine transform (DCT) algorithm or a Sobel algorithm. An example of the Sobel algorithm to calculate the angle is described as follows.

Suppose that N=8, the calculating module 241 performs Sobel operations for sixty-four pixels in the 8x8 block, and obtains sixty-four angles and corresponding weight values of the sixty-four angles. The calculating module 241 maps the sixty-four angles to specified prediction modes in a mode list (including thirty-four prediction modes) of an intra prediction of the image, and obtains an optimized prediction mode having a maximum sum of the weight values. A detailed description of the thirty-four prediction modes of the intra prediction may refer to a video compression standard of high efficiency video coding (i.e., HEVC/H.265), for example, as shown in http://www.h265.net/2010/12/analysis-of-coding-tools-in-hevc-test-model-h m-intra-prediction.html. An angle corresponding to the optimized prediction mode is regarded as the angle of the 8x8 block, and represents edge information in the 8x8 block. In other embodiments, other suitable methods may be used to obtain the angle of the 8x8 block which represents the edge information in the block.

In step S12, the obtaining module 242 obtains the angles of the N×N blocks in each CU block of the LCU. In the first embodiment, the obtaining module 242 obtains the angles of the N×N blocks in each CU block according to a recursive order in each recursive level. For example, as shown in FIG. 5, in the first recursive level, each of the four CU blocks "b", "g", "h", and "i" is processed according to the recursive order with a Z-shape sequence.

Then, the determining module 243 determines a split mode of each CU block according to the angles of the N×N blocks in each CU block. In the first embodiment, the split modes include a continuation mode and a termination mode. For example, as shown in FIG. 4, an exemplary schematic diagram of a quad tree is used to record the split mode of each CU block in the LCU, each node in the quad tree represents a CU block. The split mode of the CU block "b" is the continuation mode, which means that the CU block "b" needs to be split into four sub-blocks continually. The split mode of the CU block "h" is the termination mode, which means that the CU block "h" does not need to be split.

In detail, the determining module 243 obtains specified N×N blocks, which have identical or adjacent angle from a current CU block. If a ratio of the specified N×N blocks having identical or adjacent angle in the current CU block (e.g., the CU block "h") is greater than a preset value (e.g., 50%), the determining module 243 determines that the angles of the N×N blocks in the current CU block have high consistency (i.e., the edge information in the current CU block is well regulated), the split mode of the current CU block is the termination mode, and the current CU block does not need to be split. For example, suppose that the current CU block includes sixteen N×N blocks, if a quantity of the specified N×N blocks having identical or adjacent angle is greater than eight, the determining module 243 determines that the angles of the sixteen N×N blocks have high consistency. If the ratio of the specified N×N blocks having identical or adjacent angle in the current CU block (e.g., the CU block "b") is less than or equal to the preset value, the determining module 243 determines that the angles of the N×N blocks in the current CU block have low consistency (i.e., the edge information in the current CU block is messy), and the split mode of the current CU block is the continuation mode, the current CU block needs to be split continually.

In one embodiment, the angles of the N×N blocks are determined to be adjacent when the prediction modes corresponding to the angles of the N×N blocks are adjacent in the mode list of the intra prediction. That is, if logical orders of two prediction modes in the mode list are adjacent, the two angles corresponding to the two prediction modes are determined to be adjacent.

Suppose that a size of the current CU block is 32x32, the current CU block includes sixteen 8x8 blocks, and sixteen angles are calculated to represent the edge information in the current CU block. If the sixteen angles have high consistency (e.g., more than half of the sixteen angles are identical or adjacent), the recursive process of the current CU block is terminated, and a next CU block is processed. If the sixteen angles have low consistency (e.g., less than half of the sixteen angles are identical or adjacent), the current CU block is split into four 16x16 CU blocks, and each of the four 16x16 CU blocks is processed continually according to the recursive method, so that obtain the quad tree as shown in FIG. 4.

In the first embodiment, the split modes of all the CU blocks in the LCU is predetermined through the steps S10-S12 before a splitting operation of the LCU. If the angles of the N×N blocks in the current CU block have high consistency, the current CU block does not need to be split using the recursive method, thus, a recursive number in the quad tree is reduced and the computing time and the complexity of the recursive process is reduced, so that a speed of the image coding is improved.

In step S13, the second splitting module 244 determines whether the current CU block needs to be split according to the split mode of the current CU block. If the current CU block needs to be split, steps S14-S15 are executed, if the current CU block does not need to be split, steps S16-S18 are executed.

If the split mode of the current CU block is the continuation mode, in step S14, the second splitting module 244 splits the current CU block into four sub-blocks. For example, as shown in FIG. 5, the LCU is divided to four CU blocks "b", "g", "h", and "i" at the first recursive level, and the CU block "b" is split into four small CU blocks "c", "d", "e", and "f" at the second recursive level.

In step S15, the second splitting module 244 obtains a specified sub-block from the current CU block, determines the specified sub-block to be an updated current CU block, and the procedure returns to step S13. The specified sub-block may be a top-left sub-block of the current CU block. For example, as shown in FIG. 5, when the CU block "b" is split into four sub-blocks "c", "d", "e", and "f", the sub-block "c" is determined to be the updated current CU block.

If the split mode of the current CU block is the termination mode, in step S16, the second splitting module 244 stops splitting of the current CU block, and the predicting module 245 executes the pixel prediction for the current CU block. The pixel prediction may be the intra prediction or an inter prediction.

In step S17, the second splitting module 244 determines whether all of the CU blocks in the LCU have been predicted. If all of the CU blocks in the LCU have been predicted, the procedure ends. If any CU block in the LCU has not been predicted, the procedure goes to step S18.

In step S18, the second splitting module 244 obtains a next CU block from the LCU according to a predetermined sequence (e.g., the Z-shape sequence), determines the next CU block to be an updated current CU block, and the procedure returns to step S13. For example, as shown in FIG. 5, when the CU block "e" has been executed the pixel prediction, the CU block "f" which has a same size of the CU block "e" is determined to be the updated current CU block. When the CU block "f" has been executed the pixel prediction, the CU block "b" which is an upper level of the CU block "f" has been executed completely, and the CU block "g" has a same size of the CU block "b" is determined to be the updated current CU block.

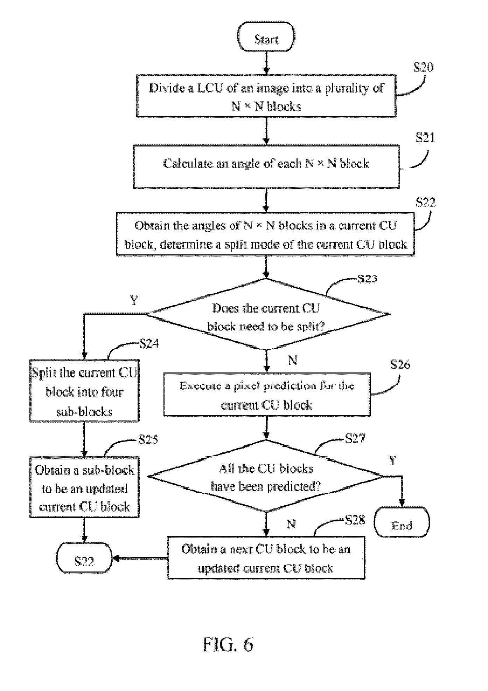

FIG. 6 is a flowchart of a second embodiment of a method for splitting an image using the electronic device 2. In the second embodiment, a split mode of a current CU block is predetermined every time through the step S20-S22 before a splitting operation of the current CU block. Depending on the embodiment, additional steps may be added, others removed, and the ordering of the steps may be changed.

In step S20, the first splitting module 240 obtains an image from the storage device 23 or other storage mediums, obtains a largest coding unit (LCU) of the image, and divides the LCU into a plurality of N×N blocks. In one embodiment, the image is divided into a plurality of LCUs of a specified size (e.g., 64x64) when the image is encoded, and each LCU is divided into a plurality of coding unit (CU) blocks of different sizes using a recursive algorithm according to a quad tree structure (refers to FIG. 4), where each CU block includes a plurality of N×N blocks, such as 8x8 blocks (e.g." N=8).

In step S21, the calculating module 241 calculates an angle of each N×N block.

In step S22, the obtaining module 242 obtains the angles of the N×N blocks in a current CU block of the LCU, and the determining module 243 determines a split mode of the current CU block according to the angles of the N×N blocks in the current CU block. In the second embodiment, the split modes include a continuation mode and a termination mode, and a determining method of the split mode refers to the first embodiment.

In step S23, the second splitting module 244 determines whether the current CU block needs to be split according to the split mode of the current CU block. If the current CU block needs to be split, steps S24-S25 are executed, if the current CU block does not need to be split, steps S26-S28 are executed.

If the split mode of the current CU block is the continuation mode, in step S24, the second splitting module 244 splits the current CU block into four sub-blocks.

In step S25, the second splitting module 244 obtains a specified sub-block from the current CU block, determines the specified sub-block to be an updated current CU block, and the procedure returns to step S22. The specified sub-block may be a top-left sub-block of the current CU block.

If the split mode of the current CU block is the termination mode, in step S26, the second splitting module 244 stops splitting of the current CU block, and the predicting module 245 executes the pixel prediction for the current CU block. The pixel prediction may be the intra prediction or an inter prediction.

In step S27, the second splitting module 244 determines whether all of the CU blocks in the LCU have been predicted. If all of the CU blocks in the LCU have been predicted, the procedure ends. If any CU block in the LCU has not been predicted, the procedure goes to step S28.

In step S28, the second splitting module 244 obtains a next CU block from the LCU according to a predetermined sequence (e.g., the Z-shape sequence), determines the next CU block to be an updated current CU block, and the procedure returns to step S22.

In the second embodiment, if the angles of the N×N blocks in the current CU block have high consistency, the current CU block does not need to be split using the recursive method, thus, a recursive number in the quad tree is reduced and the computing time and the complexity of the recursive process is reduced, so that a speed of the image coding is improved.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A method for splitting an image using an electronic device, the method comprising:
obtaining a largest coding unit (LCU) of the image, and dividing the LCU into a plurality of N×N blocks, the LCU comprising a plurality of coding unit (CU) blocks, each of the CU blocks comprising a plurality of N×N blocks;
calculating an angle of each of the N×N blocks;
determining a split mode of each of the CU blocks according to the angles of the N×N blocks;
determining whether a current CU block needs to be split according to the split mode of the current CU block; and
splitting the current CU block into four sub-blocks upon the condition that the split mode of the current CU block is a continuation mode, and stopping splitting of the current CU block upon the condition that the split mode of the current CU block is a termination mode.

2. The method according to claim 1, wherein the angle of each of the N×N blocks is calculated using a discrete cosine transform (DCT) algorithm or a Sobel algorithm.

3. The method according to claim 2, wherein the angle of each of the N×N blocks is calculated using the Sobel algorithm, the method further comprises:
performing Sobel operations for a plurality of pixels in the N×N block, and obtaining a plurality of angles and corresponding weight values of the angles; mapping the angles to specified prediction modes in a mode list of an intra prediction of the image, and obtaining an optimized prediction mode having a maximum sum of the weight values, an angle corresponding to the optimized prediction mode being regarded as the angle of the N×N block.

4. The method according to claim 1, 2, or 3, wherein the split mode of each of the CU blocks is determined by:
determining that the split mode of the current CU block is the termination mode upon the condition that a ratio of specified N×N blocks having identical or adjacent angle in the current CU block is greater than a preset value; and
determining that the split mode of the current CU block is the continuation mode upon the condition that the ratio of the specified N×N blocks having identical or adjacent angle in the current CU block is less than or equal to the preset value.

5. The method according to claim 4, wherein the adjacent angles of the N×N blocks are determined upon the condition that specified prediction modes corresponding to the angles of the N×N blocks are adjacent in a mode list of an intra prediction of the image.

6. The method according to any preceding claim, further comprising:
obtaining a specified sub-block from the current CU block when the current CU block is split into four sub-blocks, and determining the specified sub-block to be an updated current CU block.

7. The method according to claim 6, wherein the specified sub-block is a top-left sub-block of the current CU block.

8. The method according to any preceding claim, further comprising:
executing a pixel prediction for the current CU block after stopping splitting of the current CU block.

9. The method according to claim 8, wherein the pixel prediction comprises an intra prediction or an inter prediction.

10. The method according to any preceding claim, further comprising:
obtaining a next CU block from the LCU according to a predetermined sequence upon the condition that the CU blocks in the LCU have not been predicted completely, and determining the next CU block to be an updated current CU block.

11. An electronic device, comprising:
a storage device;
at least one processor; and
one or more modules that are stored in the storage device and are executed by the at least one processor, the one or more modules comprising:
a first splitting module that obtains a largest coding unit (LCU) of an image, and divides the LCU into a plurality of N×N blocks, the LCU comprising a plurality of coding unit (CU) blocks, each of the CU blocks comprising a plurality of N×N blocks;
a calculating module that calculates an angle of each of the N×N blocks;
a determining module that determines a split mode of each of the CU blocks according to the angles of the N×N blocks;
a second splitting module that determines whether a current CU block needs to be split according to the split mode of the current CU block; and
the second splitting module that further splits the current CU block into four sub-blocks upon the condition that the split mode of the current CU block is a continuation mode, and stops splitting of the current CU block upon the condition that the split mode of the current CU block is a termination mode.

12. The electronic device according to claim 11, wherein the angle of each of the N×N blocks is calculated using a discrete cosine transform (DCT) algorithm or a Sobel algorithm.

13. The electronic device according to claim 12, wherein the calculating module calculates an angle of each of the N×N blocks using the Sobel algorithm by:
performing Sobel operations for a plurality of pixels in the N×N block, and obtaining a plurality of angles and corresponding weight values of the angles; mapping the angles to specified prediction modes in a mode list of an intra prediction of the image, and obtaining an optimized prediction mode having a maximum sum of the weight values, an angle corresponding to the optimized prediction mode being regarded as the angle of the N×N block.

14. The electronic device according to claim 11, 12, or 13, wherein the split mode of each of the CU blocks is determined by:
determining that the split mode of the current CU block is the termination mode upon the condition that a ratio of specified N×N blocks having identical or adjacent angle in the current CU block is greater than a preset value; and
determining that the split mode of the current CU block is the continuation mode upon the condition that the ratio of the specified N×N blocks having identical or adjacent angle in the current CU block is less than or equal to the preset value.

15. The electronic device according to claim 14, wherein the adjacent angles of the N×N blocks are determined upon the condition that specified prediction modes corresponding to the angles of the N×N blocks are adjacent in a mode list of an intra prediction of the image.
